# EUROPEAN PATENT SPECIFICATION

(11) **EP 2 990 737 B1**
(45) Date of publication and mention of the grant of the patent: **30.05.2018**
(21) Application number: 14787997.7
(22) Date of filing: 17.04.2014
(51) Int. Cl.: F24H 1/00, F25B 41/04, F25B 47/02, F24D 17/02, F25B 49/02

(54) **HOT-WATER SUPPLY DEVICE**
HEISSWASSERVERSORGUNGSVORRICHTUNG
DISPOSITIF D'ALIMENTATION EN EAU CHAUDE

(30) Priority: 26.04.2013 JP 2013093303
(43) Date of publication of application: 02.03.2016
(73) Proprietor: Toshiba Carrier Corporation, Kawasaki-shi, Kanagawa 212-8585 (JP)
(72) Inventor: KAKUYAMA, Fushiki, Fuji-Shi, Shizuoka 416-8521 (JP)
(74) Representative: Kramer Barske Schmidtchen Patentanwälte PartG mbB
(86) International application number: PCT/JP2014/060893
(87) International publication number: WO 2014/175151

(56) References cited:
- EP-A2- 2 420 767
- WO-A1-2011/092802
- WO-A1-2012/043297
- JP-A- H1 038 422
- JP-A- H1 123 036
- JP-A- 2009 041 860
- JP-A- 2009 041 860

## Description

### Technical Field

The present invention relates to a hot-water supply system including a heat pump.

### Background Technology

In general, in a hot-water supply system of this type, if a low-temperature refrigerant flows into a refrigerant flow path of a water heat exchanger that heats and boils water at a time of defrosting operation, a water pipe feeding water for exchanging heat with the refrigerant may be cooled to freeze.

Under such circumstance, the following apparatus is known as a conventional hot-water supply system of the type mentioned above (see, for example, Patent Document 1). That is, a refrigerant inlet portion at the time of defrosting a water heat exchanger is provided with an on-off valve that is fully closed at the time of the defrosting and a liquid-side refrigerant temperature sensor. Refrigerant leakage from the on-off valve to the water heat exchanger is detected on the basis of a temperature detected by the liquid-side refrigerant temperature sensor. If the refrigerant leakage is detected, the defrosting operation is once stopped, and the on-off valve is initialized.

Furthermore, Patent Document 2 discloses a heat pump hot water supply device. Patent Document 3 discloses a heat pump hot water supply and air conditioning apparatus. Patent Document 4 discloses a hot water supply system.

### Prior Art Document

### Patent Document

Patent Document 1: Japanese Patent Application No. 2007-10242
Patent Document 2: Japanese Patent Application No. 2007-208330 (JP 2009 041860 A)
Patent Document 3: EP 2 420 767 A2
Patent Document 4: WO 2012/043297 A1

### Summary of The Invention

### Problems to be solved by The Invention

Unfortunately, in the hot-water supply system of the type mentioned above, because the on-off valve itself generally has a mechanical structure, a variability exists in the full-close (fully closing) function, and the refrigerant may leak due to, for example, jamming of foreign matter or particle. Because of such reason, depending on conditions of the defrosting operation, there is such a fear that refrigerant having an unexpectedly ultralow temperature may leak from the on-off valve to the water heat exchanger and the water pipe may freeze.

In such a case, in the conventional hot-water supply system, since the defrosting operation itself is stopped, the defrosting time increases, the amount of heat of a compressor decreases, and there increases in a time required to stabilize a refrigeration cycle after a return from the defrosting.

The present invention has been made in consideration of the circumstances in the prior art mentioned above, and an object thereof is to provide a hot-water supply system capable of enhancing an effect of preventing a water heat exchanger from freezing at the time of defrosting.

### Means for solving The Problem

A hot-water supply system according to the present invention provided in order to achieve the above-mentioned object includes: a heat pump circuit including a compressor, a four-way valve, an air heat exchanger, an expansion valve, a first on-off valve, a water heat exchanger for heating water, a second on-off valve, and a third on-off valve which are sequentially connected to a refrigerant pipe, and further including a bypass for flowing a refrigerant therethrough so as to bypass the water heat exchanger at a time of a defrosting operation; and a control apparatus configured to control the expansion valve and the first on-off valve to an adjustment degree of opening for adjusting a refrigerant flow rate, and control the second and third on-off valves to be fully opened, at a time of a hot-water supply operation of the heat pump circuit; and control the expansion valve to be fully opened, control the first and second on-off valves to be fully closed, and control the third on-off valve to the adjustment degree of opening, at the time of the defrosting operation.

Herein, the term "adjustment degree of opening" refers to a degree of valve opening for obtaining an optimum amount of refrigerant circulation.

It is desirable that the above-mentioned hot-water supply system further includes a refrigerant temperature sensor arranged on a refrigerant inlet side of the water heat exchanger at the time of the defrosting operation, and a water supply pump that supplies water to a water pipe of the water heat exchanger, and that the control apparatus control a rotational speed per unit time of the water supply pump in accordance with a temperature detected by the refrigerant temperature sensor.

Moreover, it is desirable that a check valve is provided for the third on-off valve in parallel thereto so as to flow the refrigerant only toward the second on-off valve at the time of the hot-water supply operation.

### Effects of The Invention

The hot-water supply system of the present invention having the above-mentioned characteristics includes the control apparatus configured to: control the expansion valve and the first on-off valve to the adjustment degree of opening for adjusting the refrigerant flow rate, and control the second and third on-off valves to be fully opened, at the time of the hot-water supply operation of the heat pump circuit; and control the expansion valve to be fully opened, control the first and second on-off valves to be fully closed, and control the third on-off valve to the adjustment degree of opening, at the time of the defrosting operation. Accordingly, it is possible to provide a hot-water supply system capable of enhancing an effect of preventing a water heat exchanger from freezing at the time of defrosting.

### Brief Description of The Drawings

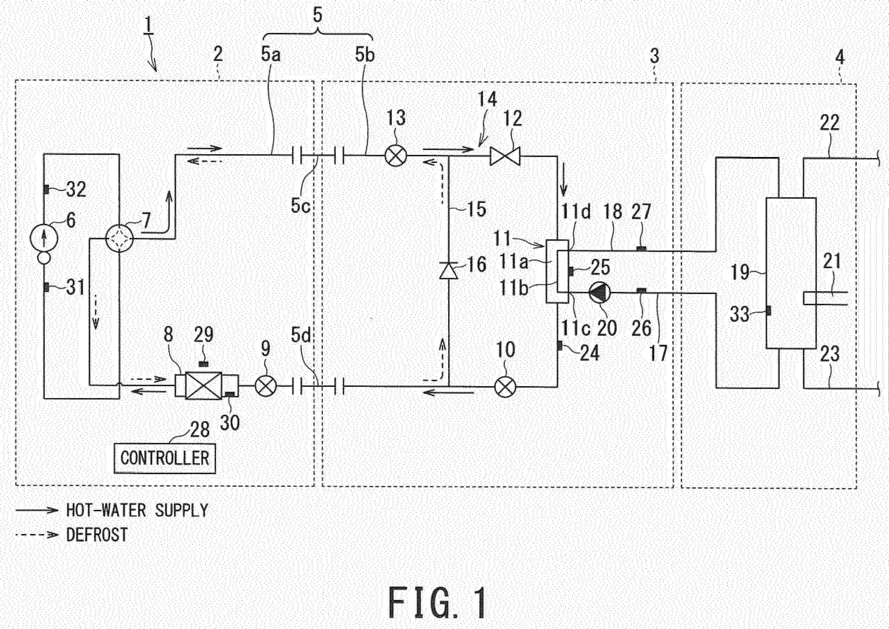

Fig. 1 is an overall configuration diagram of a hot-water supply system according to a first embodiment.

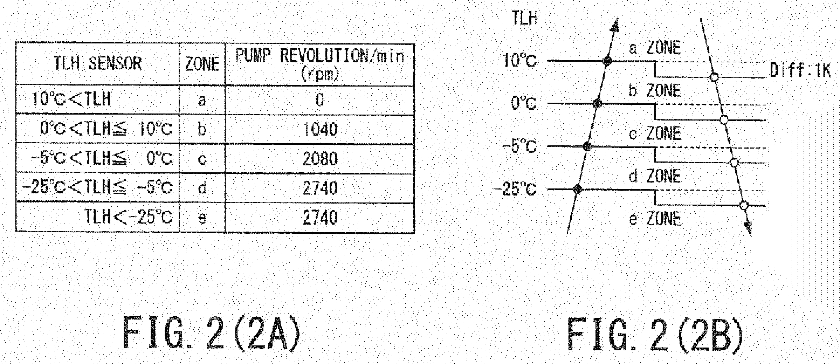

Fig. 2(2A) is a list representing a correspondence relationship between a temperature detected by a TLH sensor and a rotational speed per unit time of a water supply pump controlled on the basis of the detected temperature, and Fig. 2(2B) is a graph representing a differential set to each threshold of the temperature detected by the TLH sensor shown in the list of Fig. 2(2A), between a temperature increasing period and a temperature decreasing period.

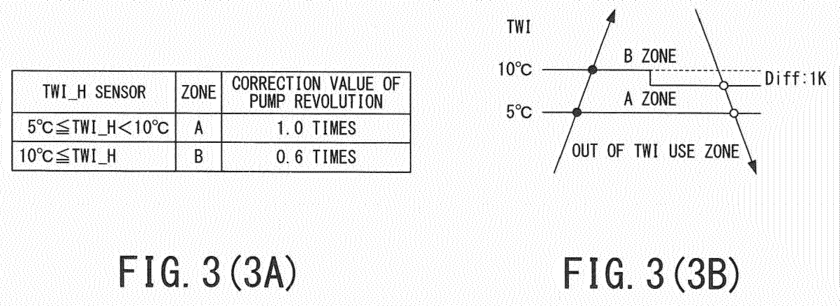

Fig. 3(3A) is a list representing a correspondence relationship between a temperature detected by a TWI_H sensor and a correction value of the rotational speed of the water supply pump controlled on the basis of the detected temperature, and Fig. 3(3B) is a graph representing a differential set to each threshold of the temperature detected by the TWI_H sensor shown in the list of Fig. 3(3A), between a temperature increasing period and a temperature decreasing period.

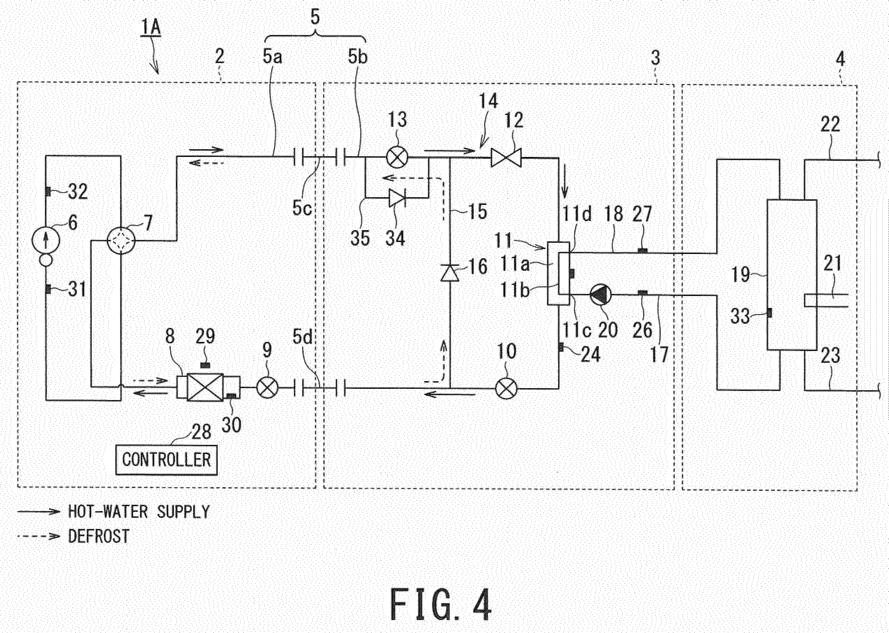

Fig. 4 is an overall configuration diagram of a hot-water supply system according to a second embodiment. Embodiment for carrying out The Invention

Hereinafter, a hot-water supply system according to embodiments of the present invention is described with reference to the accompanying drawings. It is to be noted that the same reference numerals are given to the same or corresponding portions among a plurality of drawings.

### (First Embodiment)

Fig. 1 is an overall configuration diagram of a hot-water supply system according to a first embodiment. As illustrated in Fig. 1, the hot-water supply system 1 according to the first embodiment includes an outdoor unit 2 as a heat source unit, a water heat exchange unit 3, and a hot-water supply tank unit 4.

The outdoor unit 2 and the water heat exchange unit 3 respectively include refrigerant pipes 5a and 5b which have contact end portions connected to each other by means of pipe joints 5c and 5d to thereby constitute one refrigerant pipe 5 as pipe line.

A compressor 6, a four-way valve 7, an air heat exchanger 8, an expansion valve 9 composed of, for example, a pulse motor valve, a first on-off valve 10, a refrigerant flow path 11a of a water heat exchanger 11, a hot-water supply two-way valve 12 as an example of a second on-off valve, and a third on-off valve 13 composed of, for example, a pulse motor valve are sequentially connected to the refrigerant pipe 5 in the described order to thereby constitute a heat pump circuit 14.

The heat pump circuit 14 is provided with a bypass line 15 by communicating a middle portion between the expansion valve 9 and the first on-off valve 10 with a middle portion between the hot-water supply two-way valve 12 and the third on-off valve 13. A bypass check valve 16 that allows a refrigerant to flow only toward the third on-off valve 13 from the expansion valve 9 at the time of defrosting operation is interposed in the middle of the bypass line 15.

The water heat exchanger 11 includes a water pipe 11b that feeds water heated by the refrigerant flowing through the refrigerant flow path 11a. The water pipe 11b is provided with a water inlet portion 11c to which a water supply pipe 17 is connected and a water outlet portion 11d to which a hot-water supply pipe 18 is connected. The water supply pipe 17 has another end portion (in Fig. 1, a right end portion) that is connected to a bottom portion of a hot-water storage tank 19 so as to be communicable with an inside thereof, and a water supply pump 20 that supplies water to the water pipe 11b is interposed in the middle of the water supply pipe 17. The hot-water supply pipe 18 has another end portion (in Fig. 1, a right end portion) that is connected to an upper end portion of the hot-water storage tank 19 so as to be communicable with the inside thereof.

The hot-water storage tank 19 is provided with a hot-water heater 21 that heats hot water stored inside thereof. The hot-water storage tank 19 has an upper end portion to which a hot-water storage tank outlet pipe 22 is connected so as to be communicable with the inside thereof, and also has a lower end portion to which a hot-water storage tank inlet pipe 23 is connected so as to be communicable with the inside thereof.

The heat pump circuit 14 is provided with a liquid-side refrigerant temperature sensor (called as "TLH" sensor hereinafter) 24 on the refrigerant pipe 5 (in a refrigerant inlet portion at the time of defrosting the water heat exchanger 11) between the water heat exchanger 11 and the first on-off valve 10. The TLH sensor 24 detects a temperature of a liquid-side refrigerant. The heat pump circuit 14 is further provided with a water heat exchanger water temperature sensor (called hereinafter "TCH" sensor) 25 that detects a temperature of the water fed by the water pipe 11b of the water heat exchanger 11, a water heat-exchanger inlet-side water temperature sensor (called hereinafter "TWI_H" sensor) 26 that detects a temperature of the water supplied to the inlet of the water pipe 11b of the water heat exchanger 11, and a water heat-exchanger outlet-side water temperature sensor (called hereinafter "TWO_H sensor) 27 that detects a temperature of the hot water discharged from the hot-water outlet 11d of the water pipe 11b of the water heat exchanger 11.

The hot-water supply system 1 further includes a control apparatus (which may be called "controller" hereinlater) 28. The controller 28 has a function of performing a hot-water supply operation by circulating the refrigerant in the heat pump circuit 14 in a direction shown with solid arrows in Fig. 1 through switching of the four-way valve 7.

That is, at the time of the hot-water supply operation, the controller 28 reads a detected temperature from a sensor (called hereinafter "Te" sensor) 30 that detects a refrigerant temperature of the air heat exchanger 8 acting as an evaporator. If the detected temperature is continuously equal to or lower than a predetermined value (for example, equal to or lower than 0 °C) for a predetermined time, the controller 28 determines that frost formation occurs, and switches the four-way valve 7 from the hot-water supply operation side to the defrosting operation side.

If the temperature of the air heat exchanger 8 increases as a result of the defrosting operation and the temperature detection value read from the Te sensor 30 detecting the refrigerant temperature is equal to or more than the predetermined value, the controller 28 determines that the frost formation is vanished and that the defrosting is completed. Then, the defrosting operation is stopped.

Further, at the time of switching the four-way valve 7 to the hot-water supply operation side, the controller 28 also achieves functions of controlling the expansion valve 9 and the first on-off valve 10 to an adjustment degree of opening for adjusting a refrigerant flow rate, controlling the hot-water supply two-way valve 12 as the second on-off valve to be fully opened, and controlling the third on-off valve 13 to be fully opened.

On the other hand, at the time of switching the four-way valve 7 to the defrosting operation side, the controller 28 further achieves functions of controlling the expansion valve 9 to be fully opened, controlling the first on-off valve 10 and the hot-water supply two-way valve 12 to be fully closed, and controlling the third on-off valve 13 to adjustment opening. Herein, the term "adjustment degree of opening" refers to a degree of valve opening for obtaining an optimum amount of refrigerant circulation, and also, the term "adjustment opening" refers to adjusting a valve to the adjustment degree of opening (the meanings of the above terms are equivalently used hereinafter).

In Fig. 1, reference numeral 29 denotes a sensor (To sensor) that detects the external air temperature, reference numeral 31 denotes a sensor (Ts sensor) that detects a refrigerant temperature on the suction side of the compressor 6, reference numeral 32 denotes a sensor (Td sensor) that detects the refrigerant temperature on the discharge side of the compressor 6, and reference numeral 33 denotes a sensor (T2H) sensor that detects the hot-water temperature in the lower portion of the hot-water storage tank 19.

Hereunder, a behavior of the present embodiment will be described.

Upon reception of a hot-water supply operation instruction signal from a remote controller, an operation control panel or the like, not illustrated, through a signal line or the like, not illustrated, the controller 28 switches the four-way valve 7 to the hot-water supply operation side. Almost at the same time, the controller 28 controls the third on-off valve 13 and the hot-water supply two-way valve 12 to be fully opened and also controls the first on-off valve 10 and the expansion valve 9 to be the adjustment degree of opening.

As a result, the refrigerant in the heat pump circuit 14 circulates in the direction shown with the solid arrows in Fig. 1. That is, a high-temperature/high-pressure gaseous refrigerant discharged from the compressor 6 is guided by the four-way valve 7 switched to the hot-water supply operation side so as to pass through the fully opened third on-off valve 13. Then, the refrigerant tries to flow toward the bypass line 15. However, because the refrigerant flow direction is against the bypass check valve 16 in the bypass 15, the refrigerant does not flow into the bypass line 15 but flows toward the fully opened hot-water supply two-way valve 12. Consequently, the high-temperature/high-pressure gaseous refrigerant flows through the refrigerant flow path 11a of the water heat exchanger 11 while releasing heat, thereby heating and boiling the water flowing through the water pipe 11b.

The high-temperature/high-pressure gaseous refrigerant that has released the heat in the water heat exchanger 11 condenses and liquefies to become a high-pressure liquid refrigerant. Then, the high-pressure liquid refrigerant flows into the first on-off valve 10 controlled to the adjustment degree of opening and is further controlled therein to a given flow rate by the first on-off valve 10, and the resultant refrigerant flows into the expansion valve 9.

In such operation, because the expansion valve 9 is controlled to the adjustment degree of opening, the high-pressure liquid refrigerant is controlled to a lower pressure and to a required flow rate by the expansion valve 9. Then, the resultant refrigerant flows into the air heat exchanger 8, evaporates, and absorbs heat from the external air to become a low-pressure gaseous refrigerant. The low-pressure gaseous refrigerant is returned to the suction side of the compressor 6 and compressed again by the compressor 6. Then, the above-mentioned behavior is repeated. Through the repetition of this hot-water supply operation, the water (i.e., hot water) heated by the water heat exchanger 11 passes through the hot-water supply pipe 18 and is supplied and stored into the hot-water storage tank 19 from the upper end thereof. The low-temperature water or warm water existing in the bottom portion of the hot-water storage tank 19 passes through the water supply pipe 17, and is supplied to the water pipe 11b of the water heat exchanger 11 by the water supply pump 20 and then heated in the water pipe 11b.

According to the repetition of such operation, the hot water stored in the hot-water storage tank 19 is heated to a predetermined temperature. The temperature of the stored hot water is detected by the T2H sensor 33, and the detected temperature is read by the controller 28. If the controller 28 determines that the detected temperature reaches the predetermined temperature or higher, the controller 28 acts to stop the hot-water supply operation.

During the hot-water supply operation, the air heat exchanger 8 acts as an evaporator. Hence, for example, in the case where the external air temperature is low in a cold season such as winter season or like, frost formation may occur in the air heat exchanger 8.

Accordingly, the controller 28 reads a detected temperature therein from the Te sensor 30 for detecting the refrigerant inlet-side temperature of the air heat exchanger 8. If the detected temperature is equal to or lower than the predetermined temperature, the controller 28 determines that the frost formation occurs and switches the four-way valve 7 to the defrosting operation side. At this time, the controller 28 operates to control the expansion valve 9 to be fully opened, control the first on-off valve 10 and the hot-water supply two-way valve 12 to be fully closed, and also control the third on-off valve 13 to the adjustment degree of opening.

In this state, the high-temperature/high-pressure gaseous refrigerant discharged from the compressor 6 is guided by the four-way valve 7 so as to flow into the air heat exchanger 8. The high-temperature/high-pressure gaseous refrigerant heats the air heat exchanger 8 while releasing heat, and achieves the defrosting by heating and melting the frost. The high-pressure liquid refrigerant that has released heat and liquefied in the air heat exchanger 8 passes through the fully opened expansion valve 9 to flow toward the first on-off valve 10.

At this time, the first on-off valve 10 and the hot-water supply two-way valve 12 are fully closed, whereas the bypass check valve 16 in the bypass 15 is in a forward direction, so that the liquid refrigerant passes through the bypass 15, is guided toward the third on-off valve 13 controlled to the adjustment degree of opening, and flows into the third on-off valve 13.

The first on-off valve 10 and the hot-water supply two-way valve 12 are fully closed, and the low-temperature liquid refrigerant from the expansion valve 9 flows into the bypass 15 while bypassing the water heat exchanger 11, and accordingly, the low-temperature refrigerant is prevented from flowing into the water heat exchanger 11. Hence, depending on conditions of the defrosting operation, for example, in the case where the external air temperature is low in the winter season, and thus, the temperature of the water heat exchanger 11 is low, the low-temperature liquid refrigerant can be prevented from flowing into the refrigerant flow path 11a of the water heat exchanger 11, and the water pipe 11b that feeds the water cooled by the liquid refrigerant flowing through the refrigerant flow path 11a of the water heat exchanger 11 can be prevented from freezing.

Further, since the first on-off valve 10 is a mechanical on-off valve, there are variations in on-off precision, and the liquid refrigerant may leak due to, for example, jamming of foreign substance even when the first on-off valve 10 is fully closed. In the case where the pressure of the water heat exchanger 11 is low, depending on conditions of the defrosting operation such as the external air temperature, a temperature of the water pipe 11b may decrease to, for example, even about -20°C, and the water pipe 11b may freeze.

In this regard, even in the case where the liquid refrigerant leaks from the first on-off valve 10 and flows into the refrigerant flow path 11a of the water heat exchanger 11, since the expansion valve 9 is controlled to be fully opened, not to be the adjustment degree of opening, according to the present embodiment, the liquid refrigerant that has leaked from the first on-off valve 10 comes into a high-pressure state. Accordingly, the inside of the refrigerant flow path 11a of the water heat exchanger 11 also comes into a high-pressure state, and hence, the temperature of the water passing through the water pipe 11b of the water heat exchanger 11 can be prevented from decreasing to, for example, 0°C or lower. As a result, the water pipe 11b can be prevented from freezing.

It is further to be noted that the flow rate of refrigerant circulation at the time of the defrosting operation is controlled by the third on-off valve 13.

At the time of the defrosting operation, the controller 28 controls a rotational speed per unit time of the water supply pump 20 in accordance with a liquid refrigerant inlet-side temperature of the water heat exchanger 11 detected by the TLH sensor 24, thereby preventing the water pipe 11b of the water heat exchanger 11 from freezing.

That is, as illustrated in Figs. 2(2A) and 2(2B), the controller 28 divides a temperature zone detected by the TLH sensor 24 into a plurality of zones, for example, "a" to "e", and controls the rotational speed of the water supply pump 20 in accordance with these temperature zones.

According to the control operation mentioned above, a part of the high-temperature hot water stored in the hot-water storage tank 19 circulates at a given flow rate in the water pipe 11b of the water heat exchanger 11, and accordingly, the water pipe 11b can be prevented from freezing.

Moreover, in general, the temperature detected by the TLH sensor 24 is influenced by hunting. Hence, as illustrated in Fig. 2(2B), a differential of a given temperature (for example, 1°C (1K)) is set to each of boundary values (thresholds) of the temperature zones "a" to "e" between the case where the temperature detected by the TLH sensor 24 gradually increases from, for example, -25°C to 10°C and the case where the detected temperature gradually decreases in the opposite direction. According to such setting of the differential, the stability in the rotational speed control of the water supply pump 20 can be improved.

The controller 28 further has a function of correcting the rotational speed control of the water supply pump 20 in accordance with the temperature detected by the TWI_H sensor 26 that detects the temperature of the water (i.e., hot water) supplied to the water pipe 11b of the water heat exchanger 11.

That is, in the case where the temperature of the water (hot water) supplied to the water inlet of the water pipe 11b is high, an allowance for preventing the water pipe 11b from freezing is larger than that in the case where the temperature thereof is low. Hence, as illustrated in Figs. 3(3A) and 3(3B), in the case where the temperature detected by the TWI_H sensor 26 that detects the temperature of the supplied water is high, the rotational speed of the water supply pump 20 is accordingly reduced. For example, in the case where the temperature detected by the TWI_H sensor 26 is equal to or higher than 5°C and less than 10°C, that is, in a zone A (5°C ≤ TWI_H < 10°C), a correction value of the controlled rotational speed illustrated in Fig. 2(2A), of the water supply pump 20 is "1", and the controlled rotational speed is not changed. On the other hand, in the case where the detected temperature is equal to or higher than 10°C, that is, in a zone B, the controlled rotational speed is reduced to 0.6 times. Thus, the electricity consumed by the water supply pump 20 can be saved. As to the above correction value, the differential defined in consideration of hunting in the temperature detected by the TWI_H sensor 26 is also set to this correction value.

### (Second Embodiment)

Fig. 4 is an overall configuration diagram of a hot-water supply system 1A according to a second embodiment. The hot-water supply system 1A includes a parallel circuit 35 in which a second check valve 34 is connected in parallel to the third on-off valve 13 of the first embodiment, and the second check valve 34 is in a forward direction with respect to the refrigerant flow direction at the time of the hot-water supply operation. The other configurations or structures of the second embodiment shown in Fig. 4 are the same as those in the first embodiment.

According to the first embodiment, the third on-off valve 13 is controlled to be fully opened at the time of the hot-water supply operation, and even in this case, the third on-off valve 13 applies a flow path resistance, though slight, to the refrigerant circulation flow, which results in decreasing in the operation efficiency.

In comparison, according to the arrangement of the second embodiment, when the refrigerant flows in the forward direction, a flow path resistance of the second check valve 34 is lower than the flow path resistance of the third on-off valve 13 as in the case of the first embodiment.

In the above viewpoint, in the second embodiment, at the time of the hot-water supply operation, the controller 28 controls the third on-off valve 13 to be fully closed, and feeds the refrigerant to the second check valve 34, thereby reducing the flow path resistance of the refrigerant circulation flow, and improving the efficiency in the hot-water supply operation.

It is further to be noted that, although some embodiments of the present invention have been described hereinabove, these embodiments are given as examples and are not intended to limit the scope of the present invention. These novel embodiments may be carried out in other various modes, and various omissions, alternations, and changes may be made without departing from the gist of the present invention as defined in the claims1. These embodiments and modifications thereof are included in the scope and gist of the present invention, and are also included in the inventions described in appended claims and the scope equivalent thereto.

### Reference Numeral

1, 1A --- hot-water supply system, 2 --- outdoor unit, 3 --- water heat exchange unit, 4 --- hot-water supply tank, 5, 5a, 5b --- refrigerant pipe, 6 --- compressor, 7 --- four-way valve, 8 --- air heat exchanger, 9 --- expansion valve, 10first on-off valve, 11 --- water heat exchanger, 12 --- hot-water supply two-way valve (second on-off valve), 13 --- third on-off valve, 14 --- heat pump circuit, 15 --- bypass line, 16bypass check valve, 20 --- water supply pump, 28 controller (controlling apparatus), 34 --- second check valve, 35parallel circuit.

## Claims

1. A hot-water supply system (1; 1A) comprising:
a heat pump circuit (14) including a compressor (6), a four-way valve (7), an air heat exchanger (8), an expansion valve (9), a first on-off valve (10), a water heat exchanger (11) for heating water, a second on-off valve (12), and a third on-off valve (13) which are sequentially connected to each other by means of a refrigerant pipe (5, 5a, 5b), and further including a bypass line (15) that allows a refrigerant to flow therethrough so as to bypass the water heat exchanger (11) at a time of a defrosting operation; and
a control apparatus (28) configured to control the expansion valve (9) and the first on-off valve (10) to an adjustment degree of opening for adjusting a refrigerant flow rate and configured to control the second and third on-off valves (12, 13) to be fully opened at a time of a hot-water supply operation of the heat pump circuit (14); and configured to control the expansion valve (9) to be fully opened, the first and second on-off valves (10, 12) to be fully closed, and configured to control the third on-off valve (13) to the adjustment degree of opening at the time of the defrosting operation.

2. The hot-water supply system (1; 1A) according to claim 1, further comprising a refrigerant temperature sensor (24) arranged on a refrigerant inlet side of the water heat exchanger (11) at the time of the defrosting operation, and a water supply pump (20) that supplies water to a water pipe (11b) of the water heat exchanger (11), wherein the control apparatus (28) is configured to control a rotational speed per unit time of the water supply pump (20) in accordance with a temperature detected by the refrigerant temperature sensor (24).

3. The hot-water supply system (1; 1A) according to claim 1 or 2, wherein a check valve (16) is provided for the third on-off valve (13) in parallel thereto so as to flow the refrigerant only toward the second on-off valve (12) at the time of the hot-water supply operation.

## Patentansprüche

1. Heißwasser-Zuführsystem (1; 1A), mit
einem Wärmepumpenkreislauf (14), der einen Kompressor (6), ein Vier-Wege-Ventil (7), einen Luft-Wärmetauscher (8), ein Expansionsventil (9), ein Auf-Zu-Ventil (10), ein Wasser-Wärmetauscher (11) zum Heizen von Wasser, ein zweites Auf-Zu-Ventil (12), und ein drittes Auf-Zu-Ventil (13) aufweist, welche der Reihe nach mittels einer Kältemittelleitung (5, 5a, 5b) miteinander verbunden sind, und der ferner eine Bypass-Leitung (15) aufweist, die es einem Kältemittel ermöglicht, dort hindurchzufließen, so dass es den Wasser-Wärmetauscher (11) zum Zeitpunkt eines Enteisungsvorganges umgeht, und
einem Steuerungsgerät (28) das zum Steuern des Expansionsventils (9) und des ersten Auf-Zu-Ventils (10) zu einer Justiergröße einer Öffnung zum Justieren einer Kältemittelströmungsrate konfiguriert ist, und Steuern des zweiten und dritten Auf-Zu-Ventils (12, 13) konfiguriert ist, so dass diese zum Zeitpunkt eines Heißwasser-Zuführvorganges des Wärmepumpenkreislaufes (14) vollständig geöffnet sind, und ebenso zum Steuern des Expansionsventils (9), so dass es vollständig geöffnet ist, zum Steuern des ersten und zweiten Auf-Zu-Ventils (10, 12), so dass sie vollständig geschlossen sind, konfiguriert ist, und zum Steuern des dritten Auf-Zu-Ventils (13) zu dem Justiergrad der Öffnung zum Zeitpunkt des Enteisungsvorganges konfiguriert ist.

2. Heißwasser-Zuführsystem (1; 1A) nach Anspruch 1, das weiter einen Kältemittel-Temperatursensor (24), der an einer Kältemittel-Einlassseite des Wasser-Wärmetauschers (11) zum Zeitpunkt des Enteisungsvorganges angeordnet ist, und eine Wasserzuführpumpe (20) aufweist, die Wasser einer Wasserleitung (11b) des Wasser-Wärmetausches (11) zuführt, bei dem das Steuerungsgerät (28) dazu konfiguriert ist, eine Drehgeschwindigkeit pro Zeiteinheit der Wasser-Zuführpumpe (20) gemäß einer Temperatur, die durch den Kältemittel-Temperatursensor (24) erfasst wird, zu steuern.

3. Heißwasser-Zuführsystem (1; 1A) nach Anspruch 1 oder 2, bei dem ein Rückschlagventil (16) für das dritte Auf-Zu-Ventil (13) parallel dazu vorgesehen ist, so dass das Kältemittel nur in Richtung des zweiten Auf-Zu-Ventils (12) zum Zeitpunkt des Heißwasser-Zuführvorganges strömt.

## Revendications

1. Système d'alimentation en eau chaude (1; 1A) comprenant :
un circuit de pompe à chaleur (14) incluant un compresseur (6), une valve quatre voies (7), un échangeur de chaleur à air (8), une valve d'expansion (9), une première valve marche-arrêt (10), un échangeur de chaleur à eau (11) pour chauffer de l'eau, une deuxième valve marche-arrêt (12) et une troisième valve marche-arrêt (13) qui sont raccordées séquentiellement les unes aux autres au moyen d'un tuyau de réfrigérant (5, 5a, 5b), et incluant en outre une conduite de dérivation (15) qui permet à un réfrigérant de s'écouler au travers de celle-ci de sorte à contourner l'échangeur de chaleur à eau (11) à un moment d'une opération de décongélation ; et
un appareil de commande (28) configuré pour commander la valve d'expansion (9) et la première valve marche-arrêt (10) à un degré d'ajustement d'ouverture pour l'ajustement d'un débit de réfrigérant et configuré pour commander l'ouverture complète des deuxième et troisième valves marche-arrêt (12, 13) à un moment d'une opération d'alimentation en eau chaude du circuit de pompe à chaleur (14); et configuré pour commander l'ouverture complète de la valve d'expansion (9), la fermeture complète des première et deuxième valves marche-arrêt (10, 12), et configuré pour commander la troisième valve marche arrêt (13) au degré d'ajustement d'ouverture au moment de l'opération de décongélation.

2. Système d'alimentation en eau chaude (1 ; 1A) selon la revendication 1, comprenant en outre un capteur de température de réfrigérant (24) disposé sur un côté d'entrée de réfrigérant de l'échangeur de chaleur à eau (11) au moment de l'opération de décongélation, et une pompe d'alimentation en eau (20) qui fournit de l'eau à un tuyau d'eau (11b) de l'échangeur de chaleur à eau (11), dans lequel l'appareil de commande (28) est configuré pour commander une vitesse de rotation par unité de temps de la pompe d'alimentation en eau (20) selon une température détectée par le capteur de température de réfrigérant (24).

3. Système d'alimentation en eau chaude (1 ; 1A) selon la revendication 1 ou 2, dans lequel un clapet antiretour (16) est prévu pour la troisième valve marche-arrêt (13) en parallèle de celle-ci de sorte à écouler le réfrigérant seulement vers la deuxième valve marche-arrêt (12) au moment de l'opération d'alimentation en eau chaude.
